# FASCICULE DE BREVET EUROPEEN

(11) **EP 3 560 072 B1**
(45) Date de publication et mention de la délivrance du brevet: **22.09.2021**
(21) Numéro de dépôt: 17828737.1
(22) Date de dépôt: 21.12.2017
(51) Int. Cl.: H02K 5/04, H02K 7/116, H02K 11/33, H02K 1/14, H02K 11/02, H02K 7/14, H02K 5/22, F16H 57/02

(54) **MOTOREDUCTEUR COMPACT**
KOMPAKTGETRIEBEMOTOR
COMPACT GEAR MOTOR

(30) Priorité: 21.12.2016 FR 1662976
(43) Date de publication de la demande: 30.10.2019
(60) Demande divisionnaire: 19201728.3
(73) Titulaire: MMT AG, 6300 Zug (CH)
(72) Inventeur: WATRIN, Mathieu, 2300 La Chaux-de-Fonds (CH); MELLERE, Anthony, 90100 Delle (FR)
(74) Mandataire: IP Trust
(86) Numéro de dépôt international: PCT/EP2017/084051
(87) Numéro de publication internationale: WO 2018/115259

(56) Documents cités:
- EP-A1- 1 911 951
- WO-A1-02/29959
- WO-A1-2016/092035
- DE-A1- 10 115 151
- DE-A1-102015 210 648
- DE-U1-202016 000 143
- DE-U1-202016 000 143
- US-A1- 2013 104 682

## Description

### Domaine de l'invention

La présente invention concerne le domaine des actionneurs mécatroniques destinés notamment à la commande d'organes mécaniques d'un véhicule automobile, par exemple les grilles d'aération, les volets de climatisation ou plus généralement des obturateurs de vanne. Il s'agit d'organes nécessitant un couple relativement élevé, avec un déplacement de quelques dizaines de degrés et une précision de positionnement typique de moins de 5 degrés, ainsi qu'un encombrement minimal.

### Etat de la technique

On connaît dans l'état de la technique la demande de brevet DE102014107900 décrivant un actionneur avec un moteur électrique, en particulier un moteur à courant continu sans balais comportant un stator et un rotor pourvu d'un pignon d'entraînement qui transmet le mouvement à un train d'engrenages avec au moins une roue intermédiaire.

La demande de brevet allemand DE102011054955 décrit un autre exemple d'un tel actionneur de l'art antérieur.

La demande de brevet US2013/104682 décrit un actionneur mécatronique constitué par un boîtier intégrant dans une coque un moteur électrique triphasé formé par un stator excité par des bobines électriques et par un rotor aimanté, entraînant un arbre de sortie par l'intermédiaire d'un train d'engrenages. L'axe dudit rotor, l'axe de l'arbre de sortie et les axes des roues dentés intermédiaires sont parallèles. La coque présente un axe longitudinal, le boîtier présente trois prolongements de fixation disposés au niveau de trois coins du boîtier, chacun desdits prolongements étant traversé par un perçage dont l'axe est parallèle aux axes mécaniques du moteur et des roues dentées.

### Inconvénients de l'art antérieur

Les solutions de l'art antérieur ne sont pas optimisées en ce qui concerne l'encombrement. Le remplissage du volume intérieur du boîtier n'est pas maximisé, et il en résulte des dimensions et un encombrement excessifs.

Par ailleurs, la tenue aux vibrations et au choc n'est pas totalement satisfaisante pour des applications automobiles, et les vibrations peuvent provoquer la sortie inopinée du circuit imprimé de ses supports, ou le démontage accidentel de certains composants mécaniques ou électromagnétiques.

De plus, les solutions de l'art antérieur nécessitent une fixation manuelle par les vis, ce qui est compliqué et prend du temps.

### Solution apportée par l'invention

Afin de remédier à ces inconvénients, spécifiquement d'éviter la nécessité d'une fixation manuelle par les vis, l'invention concerne selon son acception la plus générale un actionneur mécatronique constitué par un boîtier intégrant dans une coque un moteur électrique triphasé formé par un stator excité par des bobines électriques et par un rotor aimanté, entraînant un arbre de sortie par l'intermédiaire d'un train d'engrenages, l'axe dudit rotor, l'axe de l'arbre de sortie et les axes des roues dentés intermédiaires étant parallèles, la coque présentant un axe longitudinal (L), le boîtier présentant trois prolongements de fixation disposés au niveau de trois coins du boîtier, chacun desdits prolongements étant traversé par un perçage dont l'axe est parallèle aux axes mécaniques du moteur et des roues dentées. Notamment, l'un desdits prolongements présente une patte de positionnement dans un logement complémentaire, un autre desdits prolongements présente une griffe de clipsage.

L'invention concerne également un procédé de mise en place d'un actionneur mécatronique susvisé. Le procédé consiste à positionner par rapport à une structure d'accueil ledit actionneur en engageant ladite patte dans la zone d'accueil, puis en le basculant par rapport à l'arête inférieure de ladite patte, jusqu'à ce que le crochet soit engagé dans la partie complémentaire de la structure d'accueil.

L'invention concerne également plusieurs modes de réalisation vérifiés, qui peuvent être réalisés seul ou en combinaison.

Selon un mode de réalisation particulier, lesdits prolongements présentent une double fonction de fixation soit par vissage ou rivet traversant lesdits perçages soit par le clipsage de ladite griffe de clipsage lors du pivotement du boîtier par rapport à ladite patte venant se caler dans un logement prévu sur une structure d'accueil.

Selon un autre mode de réalisation, le prolongement, prévu sur la même face latérale que le prolongement munie de la patte, présente un crochet qui vient coopérer avec une partie complémentaire de ladite structure d'accueil.

Selon une variante, l'une des faces transversale est prolongée par un manchon creux pour l'introduction d'un connecteur mâle prévu sur un cordon de raccordement.

Selon une autre variante, le couvercle de ladite coque présente une ouverture à l'intérieure de laquelle est placé un palier de guidage de la roue de sortie.

De préférence, ladite coque est percée symétriquement pour permettre le passage d'un axe de transmission traversant ou le raccordement sur l'actionneur de deux axes de transmission. De plus, la roue de sortie peut présenter des sections différentes, d'un côté et de l'autre, pour le raccordement d'axes de sections différentes.

Avantageusement, ledit stator présente une forme d'étoile triangulaire radial dont les trois pôles bobinés formant les trois branches d'étoile, les axes de symétrie de deux pôles bobinés consécutifs formant un angle mécanique de 120°. Le boîtier intègre également un circuit électronique comprenant un condensateur pour le filtrage du signal électrique, la coque présentant un axe longitudinal (L).

De préférence, le stator est positionné dans le boîtier de façon à ce que l'axe de symétrie de l'un desdits trois pôles bobinés forme avec l'axe longitudinal (L) un angle de 90°.

Les modes de réalisations ci-dessous sont donnés au titre des exemples illustratifs pour mieux comprendre le fonctionnement d'actionneur. Cependant, ils ne font pas partie de l'invention.

Actionneur mécatronique constitué par un boîtier intégrant dans une coque un moteur électrique triphasé formé par un stator excité par des bobines électriques et par un rotor aimanté, entraînant un arbre de sortie par l'intermédiaire d'un train d'engrenages, l'axe dudit rotor, l'axe de l'arbre de sortie et les axes des roues dentés intermédiaires étant parallèles, ledit stator présentant une forme d'étoile triangulaire radiale dont les trois pôles bobinés formant les trois branches d'étoile, les axes de symétrie de deux pôles bobinés consécutifs formant un angle mécanique de 120°, le boîtier intégrant également un circuit électronique comprenant un condensateur pour le filtrage du signal électrique, la coque présentant un axe longitudinal (L),
caractérisé en ce que
le stator est positionné dans le boîtier de façon à ce que l'axe de symétrie de l'un desdits trois pôles bobinés forme avec l'axe longitudinal (L) un angle compris entre 70 et 110°.

Selon une variante, le stator est positionné dans le boîtier de façon à ce que l'axe de symétrie de celui des trois pôle bobiné formant avec l'axe longitudinal (L) un angle compris entre 70 et 110° présente un chanfrein au niveau de la zone la plus proche de la paroi latérale.

Selon un mode de réalisation particulier, ledit condensateur de filtrage est constitué par un composant tubulaire monté perpendiculairement au plan du circuit imprimé, ledit condensateur étant positionné dans l'espace délimité d'une part par deux pôles statoriques consécutifs (42, 43) dont le pôle positionné entre 70 et 110° par rapport au plan médian, et d'autre part par l'angle du boîtier situé en face desdits deux pôles statoriques complémentaires.

De préférence, la totalité des composants électroniques sont soudés sur la surface du circuit imprimé orientée vers le stator, ledit circuit imprimé présentant un trou de passage de l'axe du rotor et des trous étamés pour l'insertion des plots de connexion des trois bobines électriques, ainsi que des broches du connecteur électrique, lesdites broches s'étendant toutes parallèlement aux axes mécaniques, en direction de la surface du circuit imprimé.

Avantageusement, le circuit imprimé présente au moins un trou ou une encoche pour le passage d'un axe mécanique d'une desdites roues dentées.

De préférence, le circuit imprimé présente une dimension telle que sa projection dans un plan transversal s'inscrit dans la projection du cercle circonscrit audit stator, sur ledit plan transversal, hormis pour la partie arrière du circuit imprimé correspondant à la connexion du connecteur électrique et en ce que ledit circuit imprimé est positionné par rapport audit boîtier pour préserver, par rapport aux faces latérales de part et d'autre un espace d'une largeur supérieure à 10% de la largeur intérieure dudit boîtier.

L'actionneur selon l'exemple illustratif comporte selon un mode de mise en œuvre particulier un ressort métallique positionné en compression entre une zone non isolée de la culasse dudit stator et une piste conductrice de masse du circuit imprimé.

Avantageusement, ledit stator présente un perçage non isolé pour recevoir la partie inférieure dudit ressort, la surface périphérique dudit ressort venant en contact avec la surface intérieure non isolée dudit perçage lorsque le ressort est mis en compression par le circuit imprimé.

Selon une variante particulière, ledit boîtier est constitué par une coque et un couvercle de fermeture complémentaires, l'une des faces latérales de ladite coque présentant une protubérance intérieure percée par une cavité débouchant, positionné entre deux roues dentées, et une deuxième protubérance percée par une cavité de section non circulaire, ledit couvercle présentant deux plots complémentaires auxdites cavités, d'une longueur supérieure à d'autres plots de liaison, le couvercle présentant en outre des paliers de guidage de l'extrémité supérieure des axes mécaniques.

Avantageusement, ledit couvercle présente en outre au moins un plot formant une butée pour le circuit imprimé, ladite butée ne venant pas en contact avec le circuit imprimé lorsque ce dernier est en position nominale.

Selon un mode de réalisation particulier, ledit couvercle présente en outre au moins un plot formant une butée pour le stator, ladite butée ne venant pas en contact avec le stator lorsque ce dernier est en position nominale.

Selon un autre mode de réalisation particulier, le boîtier présente trois prolongements de fixation disposé au niveau de trois coins du boîtier, chacun desdits prolongements étant traversé par un perçage dont l'axe est parallèle aux axes mécaniques du moteur et des roues dentées, l'un desdits prolongement présentant une patte de positionnement dans un logement complémentaire, un autre desdits prolongements présentant une griffe de clipsage lors du pivotement du boîtier par rapport à ladite patte de positionnement.

### Description détaillée d'un exemple non limitatif de l'invention

La présente invention sera mieux comprise à la lecture de la description détaillée d'un exemple non limitatif de l'invention qui suit, se référant aux dessins annexés où :
- la figure 1 représente une vue en perspective de trois quart dessus d'un actionneur selon l'invention ;
- la figure 2 représente une vue selon un plan de coupe médian de l'actionneur selon l'invention, couvercle et circuit imprimé enlevés ;
- la figure 3 représente une vue selon un plan de coupe médian de l'actionneur selon l'invention, couvercle enlevé ;
- la figure 4 représente une vue en détail de la liaison électrique entre le stator et le circuit imprimé ne faisant pas partie de l'invention revendiquée;
- la figure 5 représente une vue de dessous du couvercle ne faisant pas partie de l'invention revendiquée.

### Description détaillée d'un exemple d'actionneur

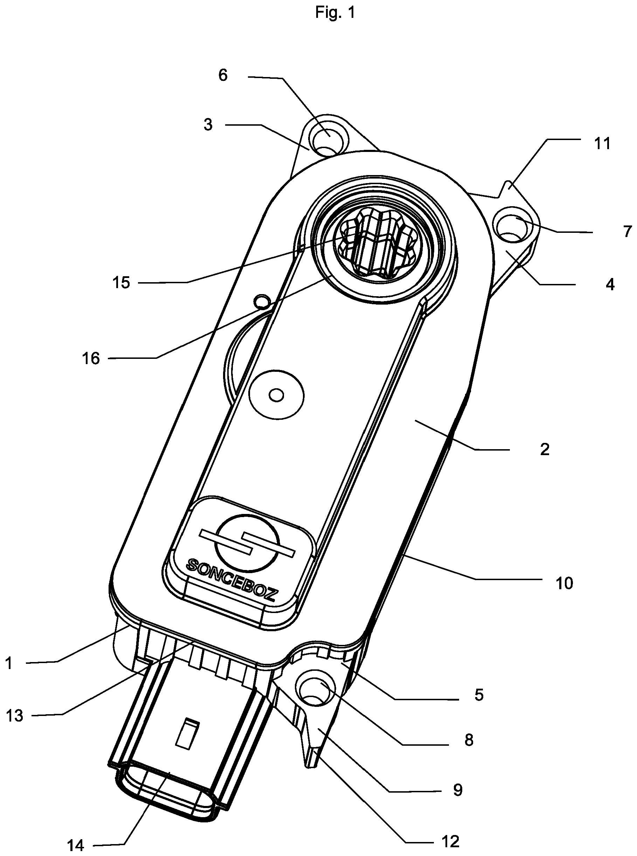

La figure 1 représente une vue extérieure d'un exemple d'actionneur, constitué par une coque (1) fermée par un couvercle (2).

La coque (1) présente trois prolongements (3, 4, 5) au niveau de trois de ses angles. Chacun des prolongements présente un perçage respectivement (6, 7, 8).

Les deux prolongements (4, 5) présentent une double fonction de fixation :
- soit par vissage ou rivet traversant les perçages (7, 8)
- soit par clipsage.

Pour permettre une fixation par clipsage, l'un des prolongements (5) présente une patte (9) qui peut venir se caler dans un logement prévu sur une structure d'accueil.

Le prolongement (4), prévu sur la même face latérale (10) que le prolongement (5) munie de la patte (9), présente un crochet (11) qui vient coopérer avec une partie complémentaire de la structure d'accueil. La mise en place se fait en positionnant l'actionneur en engageant la patte (9) dans la zone d'accueil, puis en le basculant par rapport à l'arête inférieure (12) de la patte, jusqu'à ce que le crochet (11) soit engagé dans la partie complémentaire de la structure d'accueil.

L'une des faces transversale (13) est prolongée par un manchon creux (14) pour l'introduction d'un connecteur mâle prévu sur un cordon de raccordement.

Le couvercle (2) présente une ouverture (15) à l'intérieure de laquelle est placé un palier (16) de guidage de la roue de sortie.

Optionnellement, le boîtier peut être également percé symétriquement pour permettre le passage d'un axe de transmission traversant ou le raccordement sur l'actionneur de deux axes de transmission.

La roue de sortie peut présenter des sections différentes, d'un côté et de l'autre, pour le raccordement d'axes de sections différentes.

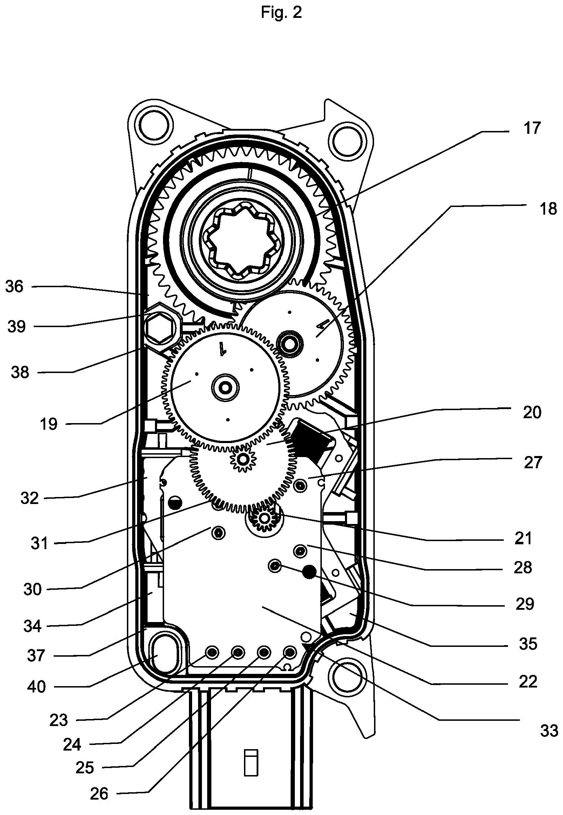

La figure 2 représente une vue de dessus de l'actionneur après retrait du couvercle (2).

La roue de sortie (17) est entraînée par un train d'engrenages formé d'une succession de roues dentées (17 à 21), montées sur des axes parallèles, perpendiculaires au plan de liaison entre le couvercle (2) et la coque (1).

Le rotor (71) du moteur électrique entraîne une roue (21) entraînant le train d'engrenages.

L'axe du rotor traverse un perçage d'un circuit imprimé (22).

Aucun composant électronique n'est monté sur la face supérieure du circuit imprimé (22) ce qui permet une réalisation par un procédé de soudure par vague en une seule passe machine simple.

Le circuit imprimé (22) présente une série de trous étamés (23 à 26) pour la liaison avec les broches du connecteur, s'étendant perpendiculairement au plan médian.

Il présente également des trous étamés (27 à 31) ― un sixième trou étamé étant masqué sur la figure 2 par la roue dentée (20) ― pour la connexion des plots d'alimentation des bobines électriques. Ces plots sont par exemple des plots à emmanchement (« press-fitt » en anglais) permettant de réaliser le raccordement électrique du circuit imprimé (22) sans soudure, par un simple chassage du circuit imprimé (22) sur les plots en érection selon une direction perpendiculaire à la surface du circuit imprimé (22).

La surface du circuit imprimé (22) ne recouvre pas la surface enveloppante du stator (32).

La projection du cercle circonscrit au stator (32) sur un plan transversal recouvre entièrement la surface projetée du circuit imprimé (22) sur ce même plan, à l'exception de la partie (33) du circuit imprimé (22) assurant la liaison avec le connecteur.

Par ailleurs, le circuit imprimé (22) ne vient pas en contact avec les bords de la coque (1), mais préserve de part et d'autre un espace (34, 35) d'une largeur supérieure à 10% de la largeur intérieure de la coque (1).

La surface intérieure de la paroi latérale (38) de la coque (1) présente une première protubérance intérieure (36) et une seconde protubérance intérieure (37).

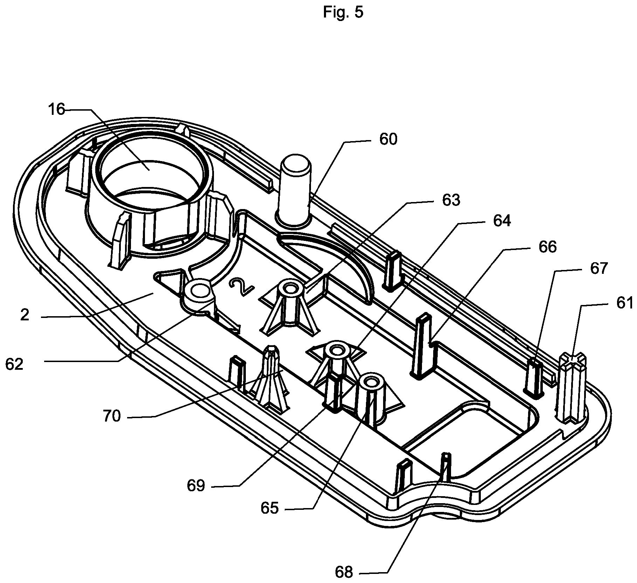

La première protubérance intérieure (36) est positionnée dans l'espace disponible entre la roue de sortie (17) et la roue dentée intermédiaire (19). Elle présente une cavité (39) de section hexagonale pour recevoir un picot de positionnement de section circulaire (60) prévu sur le couvercle (2) et visible en figure 5.

La seconde protubérance intérieure (37) est positionnée dans l'angle de la coque (1) dépourvue de protubérance extérieure. Elle présente une cavité débouchante (40) oblongue dans l'exemple décrit, avec un axe principal parallèle à la face latérale (38) pour faciliter le positionnement du couvercle (2) par rapport à la coque (1).

Cette cavité débouchante (40) est destinée à recevoir un picot anti-rotation (61), visible en figure 5 présentant une section en forme de croix et s'étendant perpendiculairement à la surface intérieure du couvercle (2).

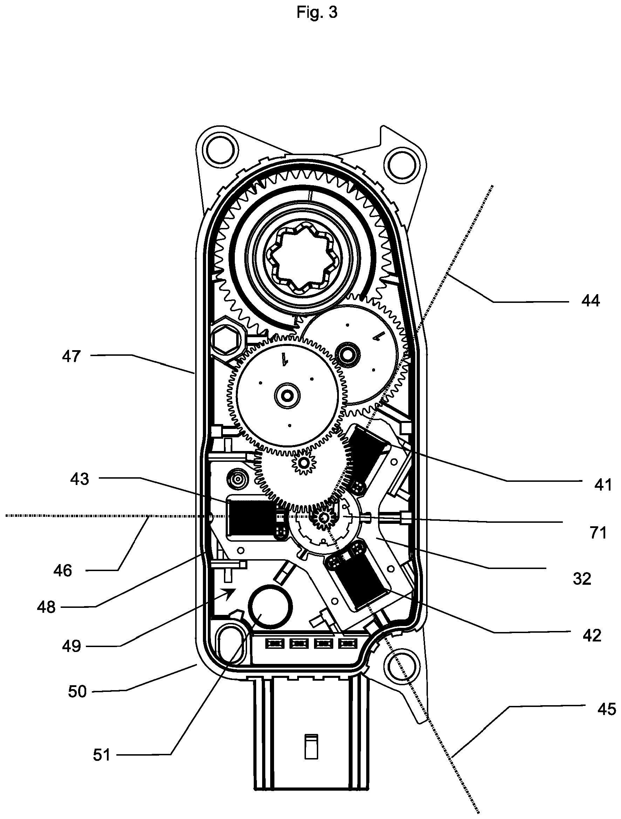

La figure 3 représente une vue de l'intérieur de l'actionneur après retrait du couvercle (2) et du circuit imprimé (22).

Le stator (32) présente trois pôles bobinés (41 à 43) s'étendant radialement et est formé par une structure de tôles empilées. Chaque pôle (41 à 43) présente une dent centrale entourée par une bobine.

Les axes médians (44 à 46) des pôles bobinés respectivement (41 à 43) forment un angle mécanique de 120° deux à deux. Le stator présente ainsi une forme d'étoile triangulaire radiale avec chaque pôle bobiné formant une branche d'étoile.

La coque (1) présente un axe longitudinal (L) reliant le connecteur (14) à la roue de sortie (17). Cet axe longitudinal est parallèle aux deux faces latérales de la coque (1), chacune s'étendant le long de la direction longitudinale.

Le stator (32) est positionné dans la coque (1) de telle sorte que l'un des pôles (43) soit orienté pour former un angle d'environ 90° par rapport à l'axe longitudinal (L) de la coque (1). Ce positionnement permet de réduire la largeur de la coque et donc l'encombrement général de l'actionneur et d'optimiser l'occupation de l'espace intérieur de la coque (1).

Une tolérance de ± 20°, et de préférence ± 10° est possible car l'effet sur l'encombrement reste minime en raison d'un impact selon le cosinus de cette variation angulaire. L'effet d'un léger décalage angulaire par rapport à la position optimale à 90° peut encore être réduit en prévoyant un chanfrein (48) à l'angle du stator venant en contact avec la face latérale (47).

Ce positionnement du rotor (32) permet aussi de dégager un espace (49) entre les deux pôles (42, 43) du stator, et l'angle (50) de la coque. Cet espace permet de positionner un condensateur de filtrage (51), typiquement chimique et de forme cylindrique, soudé sur le circuit imprimé (22).

### Description détaillée de la mise à la masse du stator

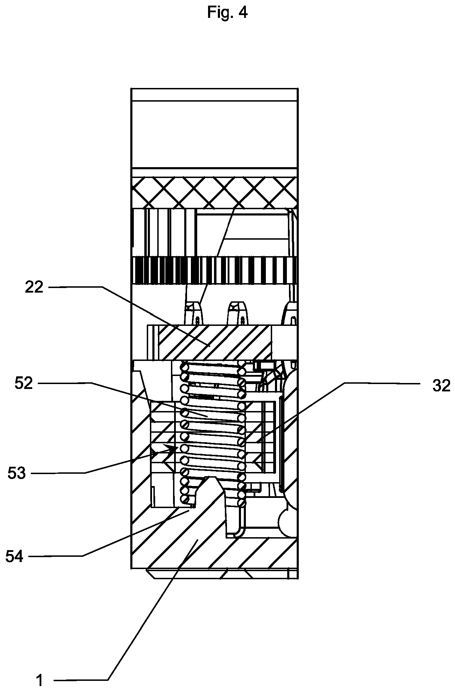

La figure 4 représente une vue agrandie partielle du stator (32) et du circuit imprimé (22).

Pour réaliser la mise à la masse électrique du stator (32), l'actionneur comporte un ressort (52) métallique introduit dans un perçage traversant (53) formé dans la culasse statorique. Le fond de la coque (1) présente en regard de ce perçage (53) une surface étagée ou inclinée, pour former une zone de réception de l'extrémité inférieure (54) du ressort qui n'est pas parallèle au plan transversal. Cette configuration conduit à un flambage du ressort, lorsqu'il est mis sous contrainte, ce qui force un contact mécanique et donc électrique entre les spires du ressort (52) et la surface intérieure du perçage (53).

Du côté opposé, le ressort (52) vient en contact avec une piste conductrice du circuit imprimé (22), qui est relié à la masse.

Lors de la mise en place du circuit imprimé, celui-ci vient s'appuyer sur le ressort (52) et le mettre en compression, assurant ainsi une bonne liaison électrique et mécanique entre la culasse du stator (22) et la piste conductrice reliée à la masse.

### Description détaillée du couvercle

La figure 5 représente une vue de la surface intérieure du couvercle (2).

Il présente un palier (16) assurant le positionnement et le guidage de la roue de sortie (17), ainsi que des paliers (62 à 65) pour le positionnement et le guidage des extrémités des axes des roues dentées respectivement (18 à 21).

Le couvercle (2) présente en outre deux picots d'assemblage (60, 61) dont la longueur est supérieure aux paliers (62 à 65) de façon à permettre le positionnement précis du couvercle (2) par rapport à la coque (1) et des éléments mécaniques, notamment les axes des roues dentées intermédiaires, de la roue de sortie et du rotor (71), de façon à ce que, lorsque l'on rapproche le couvercle (2) de la coque (1), les extrémités des axes s'engagent sans difficultés dans les paliers correspondants.

Le couvercle présente en outre quatre butées (66 à 69) destinées à limiter les déplacements inopinés du circuit imprimé (22) résultant de vibration. Ces butées (66 à 69) ne viennent pas en contact avec la surface du circuit imprimé (22) lorsque celui-ci occupe sa position nominale, mais empêche un déplacement excessif risquant de désaccoupler les plots de connexion lors de chocs ou de vibrations.

Un plot (70) limite de la même façon le déplacement du stator (32) sans venir en contact avec ce dernier lorsqu'il est en position nominale.

## Revendications

1. Actionneur mécatronique constitué par un boîtier intégrant dans une coque (1) un moteur électrique triphasé formé par un stator (32) excité par des bobines électriques et par un rotor (71) aimanté, entraînant un arbre de sortie (17) par l'intermédiaire d'un train d'engrenages, l'axe dudit rotor (71), l'axe de l'arbre de sortie (17) et les axes des roues dentées intermédiaires (18 à 20) étant parallèles, la coque (1) présentant un axe longitudinal (L), le boîtier présentant trois prolongements de fixation disposés au niveau de trois coins du boîtier (3 à 5), chacun desdits prolongements (3 à 5) étant traversé par un perçage (6 à 8) dont l'axe est parallèle aux axes mécaniques du moteur et des roues dentées, **caractérisé en ce que** l'un desdits prolongements (5) présente une patte (9) de positionnement dans un logement complémentaire, un autre desdits prolongements (4) présente une griffe de clipsage (11).

2. Actionneur mécatronique selon la revendication 1 **caractérisé en ce que** lesdits prolongements (4,5) présentent une double fonction de fixation soit par vissage ou rivet traversant lesdits perçages (7, 8) soit par le clipsage de ladite griffe de clipsage (11) lors du pivotement du boîtier par rapport à ladite patte (9) venant se caler dans un logement prévu sur une structure d'accueil.

3. Actionneur mécatronique selon la revendication 2 **caractérisé en ce que** le prolongement (4), prévu sur la même face latérale (10) que le prolongement (5) munie de la patte (9), présente un crochet (11) qui vient coopérer avec une partie complémentaire de ladite structure d'accueil.

4. Actionneur mécatronique selon la revendication 1 **caractérisé en ce que** l'une des faces transversale (13) est prolongée par un manchon creux (14) pour l'introduction d'un connecteur mâle prévu sur un cordon de raccordement.

5. Actionneur mécatronique selon la revendication 1 **caractérisé en ce que** le couvercle (2) de ladite coque (1) présente une ouverture (15) à l'intérieure de laquelle est placé un palier (16) de guidage de la roue de sortie.

6. Actionneur mécatronique selon la revendication 1 **caractérisé en ce que** ladite coque (1) est percée symétriquement pour permettre le passage d'un axe de transmission traversant ou le raccordement sur l'actionneur de deux axes de transmission.

7. Actionneur mécatronique selon la revendication précédente caractérisé roue de sortie peut présenter des sections différentes, d'un côté et de l'autre, pour le raccordement d'axes de sections différentes.

8. Actionneur mécatronique selon la revendication 1 **caractérisé en ce que** ledit stator (32) présente une forme d'étoile triangulaire radial dont les trois pôles bobinés (41 à 43) formant les trois branches d'étoile, les axes de symétrie de deux pôles bobinés consécutifs formant un angle mécanique de 120°, le boîtier intégrant également un circuit électronique (22) comprenant un condensateur (51) pour le filtrage du signal électrique, la coque (1) présentant un axe longitudinal (L),

9. Actionneur mécatronique selon la revendication 1 **caractérisé en ce que** le stator (32) est positionné dans le boîtier de façon à ce que l'axe de symétrie de l'un desdits trois pôles bobinés (41 à 43) forme avec l'axe longitudinal (L) un angle de 90°.

10. Procédé de mise en place d'un actionneur mécatronique conforme à la revendication 1 **caractérisé en ce qu'**il consiste à positionner par rapport à une structure d'accueil ledit actionneur en engageant ladite patte (9) dans la zone d'accueil, puis en le basculant par rapport à l'arête inférieure (12) de ladite patte (9), jusqu'à ce que le crochet (11) soit engagé dans la partie complémentaire de la structure d'accueil.

## Patentansprüche

1. Mechatronischer Aktuator, bestehend aus einem Gehäuse, das in einer Schale (1) einen Drehstromelektromotor enthält, der aus einem durch elektrische Spulen erregten Stator (32) und einem magnetisierten Rotor (71) gebildet ist, der über einen Getriebezug eine Abtriebswelle (17) antreibt, wobei die Achse des Rotors (71), die Achse der Abtriebswelle (17) und die Achsen der Zwischenzahnräder
(18 bis 20) parallel sind, wobei die Schale (1) eine Längsachse (L) aufweist, das Gehäuse drei Befestigungsfortsätze aufweist, die an drei Ecken des Gehäuses (3 bis 5) angeordnet sind, wobei jeder der Fortsätze (3 bis 5) von einer Bohrung (6 bis 8) durchquert wird, deren Achse parallel zu den mechanischen Achsen des Motors und der Zahnräder verläuft, **dadurch gekennzeichnet, dass** einer der Fortsätze (5) eine Lasche (9) zur Positionierung in einem komplementären Sitz aufweist, ein anderer der Fortsätze (4) eine Klemmklaue (11) aufweist.

2. Mechatronischer Aktuator nach Anspruch 1, **dadurch gekennzeichnet, dass** die Fortsätze (4, 5) eine doppelte Funktion der Befestigung entweder durch Verschrauben oder Nieten, die die Bohrungen (7, 8) durchqueren, oder durch Klemmen der Klemmklaue (11) während des Verschwenkens des Gehäuses relativ zu der Lasche (9), die sich in einem an einer Aufnahmestruktur vorgesehenen Sitz verkeilt, aufweist.

3. Mechatronischer Aktuator nach Anspruch 2, **dadurch gekennzeichnet, dass** der Fortsatz (4), der an derselben Seitenfläche (10) wie der mit der Lasche (9) versehene Fortsatz (5) vorgesehen ist, einen Haken (11) aufweist, der mit einem komplementären Teil der Aufnahmestruktur zusammenwirkt.

4. Mechatronischer Aktuator nach Anspruch 1, **dadurch gekennzeichnet, dass** eine der Querflächen (13) durch eine Hohlhülse (14) zum Einführen eines an einer Anschlussschnur vorgesehenen Steckers verlängert ist.

5. Mechatronischer Aktuator nach Anspruch 1, **dadurch gekennzeichnet, dass** der Deckel (2) der Schale (1) eine Öffnung (15) aufweist, in deren Innerem ein Lager (16) zum Führen des Abtriebsrades angeordnet ist.

6. Mechatronischer Aktuator nach Anspruch 1, **dadurch gekennzeichnet, dass** die Schale (1) symmetrisch gebohrt ist, um den Durchgang einer durchquerenden Getriebewelle oder die Verbindung von zwei Getriebewellen an dem Aktuator zu ermöglichen.

7. Mechatronischer Aktuator nach dem vorhergehenden Anspruch, **dadurch gekennzeichnet, dass** das Abtriebsrad auf der einen und der anderen Seite unterschiedliche Querschnitte zum Verbinden von Achsen unterschiedlicher Querschnitte aufweisen kann.

8. Mechatronischer Aktuator nach Anspruch 1, **dadurch gekennzeichnet, dass** der Stator (32) die Form eines radialen Dreieckssterns hat, dessen drei gewickelte Pole (41 bis 43) die drei Sternzweige bilden, wobei die Symmetrieachsen von zwei aufeinanderfolgenden gewickelten Polen einen mechanischen Winkel von 120° bilden, wobei das Gehäuse auch eine elektronische Schaltung (22) enthält, die einen Kondensator (51) zum Filtern des elektrischen Signals umfasst, wobei die Schale (1) eine Längsachse (L) aufweist.

9. Mechatronischer Aktuator nach Anspruch 1, **dadurch gekennzeichnet, dass** der Stator (32) im Gehäuse so positioniert ist, dass die Symmetrieachse eines der drei gewickelten Pole (41 bis 43) mit der Längsachse (L) einen Winkel von 90° bildet.

10. Verfahren zum Einbau eines mechatronischen Aktuators nach Anspruch 1, **dadurch gekennzeichnet, dass** es darin besteht, den Aktuator relativ zu einer Aufnahmestruktur zu positionieren, indem die Lasche (9) in den Aufnahmebereich in Eingriff gebracht wird und sie dann relativ zu der Unterkante (12) der Lasche (9) gekippt wird, bis der Haken (11) in den komplementären Teil der Aufnahmestruktur eingreift.

## Claims

1. Mechatronic actuator consisting of a case incorporating, in a shell (1), a three-phase electric motor formed by a stator (32) excited by electric coils and by a magnetized rotor (71), driving an output shaft (17) by means of a gear train, the axis of said rotor (71), the axis of the output shaft (17) and the axes of the intermediate toothed wheels (18 to 20) being parallel, the shell (1) having a longitudinal axis (L), the case having three attachment extensions arranged at three corners of the case (3 to 5), each of said extensions (3 to 5) having a bore (6 to 8) passing therethrough, the axis of which is parallel to the mechanical axes of the motor and of the toothed wheels, **characterized in that** one of said extensions (5) has a tab (9) for positioning in a complementary housing, another of said extensions (4) has a clipping prong (11).

2. Mechatronic actuator according to claim 1, **characterized in that** said extensions (4, 5) have a dual function of attachment either by a screw connection or rivet passing through said bores (7, 8) or by clipping said clipping prong (11) during the pivoting of the case relative to said tab (9) which is wedged in a housing provided on a receiving structure.

3. Mechatronic actuator according to claim 2, **characterized in that** the extension (4), provided on the same lateral face (10) as the extension (5) provided with the tab (9), has a hook (11) which cooperates with a complementary part of said receiving structure.

4. Mechatronic actuator according to claim 1, **characterized in that** one of the transverse faces (13) is extended by a hollow sleeve (14) for the introduction of a male connector provided on a connection cord.

5. Mechatronic actuator according to claim 1, **characterized in that** the cover (2) of said shell (1) has an opening (15) inside which a bearing (16) for guiding the output wheel is placed.

6. Mechatronic actuator according to claim 1, **characterized in that** said shell (1) is drilled symmetrically to allow the passage of a through transmission shaft or the connection to the actuator of two transmission shafts.

7. Mechatronic actuator according to the preceding claim, **characterized in that** the output wheel can have different sections, on one side and the other, for connecting axes of different sections.

8. Mechatronic actuator according to claim 1, **characterized in that** said stator (32) has a radial triangular star shape, the three wound poles (41 to 43) of which form the three star branches, the axes of symmetry of two consecutive wound poles forming a mechanical angle of 120°, the case also incorporating an electronic circuit (22) comprising a capacitor (51) for filtering the electrical signal, the shell (1) having a longitudinal axis (L),

9. Mechatronic actuator according to claim 1, **characterized in that** the stator (32) is positioned in the case such that the axis of symmetry of one of said three wound poles (41 to 43) forms an angle of 90° with the longitudinal axis (L).

10. Method for installing a mechatronic actuator according to claim 1, **characterized in that** it consists in positioning said actuator relative to a receiving structure by engaging said tab (9) in the receiving zone, then by tilting it with respect to the lower edge (12) of said tab (9), until the hook (11) is engaged in the complementary part of the receiving structure.
